# EUROPÄISCHE PATENTSCHRIFT

(11) **EP 2 757 666 B1**
(45) Veröffentlichungstag und Bekanntmachung des Hinweises auf die Patenterteilung: **24.06.2015**
(21) Anmeldenummer: 13151677.5
(22) Anmeldetag: 17.01.2013
(51) Int. Cl.: H02K 9/10, H02K 7/18

(54) **Verbesserte Kühlung einer elektrischen Maschine**
Improved cooling of an electrical machine
Refroidissement amélioré d'une machine électrique

(43) Veröffentlichungstag der Anmeldung: 23.07.2014
(73) Patentinhaber: Siemens Aktiengesellschaft, 80333 München (DE)
(72) Erfinder: Memminger, Oliver, 94127 Neuburg a. Inn (DE); Urlhardt, Christian, 94081 Fürstenzell (DE)

(56) Entgegenhaltungen:
- WO-A1-2012/080566
- US-A1- 2011 278 969
- US-A1- 2012 217 756
- US-B1- 6 359 350

## Beschreibung

Die Erfindung betrifft eine elektrische Maschine mit einem Stator und einen im Innern des Stators angeordneten zylindrischen Rotor, welche in einem Gehäuse angeordnet sind, wobei zwischen Stator und Rotor ein Spalt angeordnet ist.

Eine derartige elektrische Maschine ist bei industriellen Anwendungen weit verbreitet.

Insbesondere bei permanenterregten Generatoren kann eine effektive Kühlung der Permanentmagnete im Rotor durch Zuführung von Kühlluft in axialer Richtung erreicht werden. Die Kühlung der Permanentmagneten ist für einen permanenterregten Generator von zentraler Bedeutung, da abhängig vom Magnetmaterial eine dauerhafte Entmagnetisierung der Magnete bei zu hohen Temperaturen stattfinden kann.

Bisher werden permanenterregte Generatoren einflutig oder zweiflutig gekühlt.
- Bei der einflutigen Kühlung erhitzt sich die Kühlluft bei dem Weg in axialer Richtung durch den Rotor. Die Magnete am Ende des Rotors können also nur noch mit deutlich wärmerer Kühlluft gekühlt werden. Dies ermöglicht eine sehr kompakte Bauweise in axialer Richtung.
- Bei einer zweiflutigen Kühlung des Generators wird in axialer Richtung nach jedem Magnet ein radialer Kühlluftschlitz in das Läuferbleckpaket eingefügt. Dadurch wird jeder Magnet mit Kühlluft mit einem relativ niedrigen Temperaturniveau gekühlt. Hierdurch vergrößert sich jedoch der Bauraum, der in axiale Richtung benötigt wird.

Aus der DE 10 2010 029 986 A1 ist eine elektrische Maschine mit einem Stator und einem Rotor bekannt, welche beide aus Teilblechpaketen bestehen, in welchen jeweils axial verlaufende Kühlkanäle angeordnet sind. Die Teilblechpakete des Rotors wie auch jene des Stators sind untereinander in axialer Richtung beabstandet, so dass sich außerdem radial verlaufende Kühlkanäle zwischen den jeweiligen Teilblechpaketen ergeben. An den axialen Enden des Rotors sind zwei Axiallüfter vorgesehen, welche die Kühlluft innerhalb des Motorsgehäuses umwälzen. Zusätzlich weist das Gehäuse einen Wasser-Kühlmantel auf.

Eine ähnliche Kühleinrichtung ist auch aus WO 2012/080566 bekannt.

Der Erfindung liegt die Aufgabe zugrunde, eine elektrische Maschine mit verbesserter Kühlung zu schaffen.

Diese Aufgabe wird durch eine elektrische Maschine der eingangs genannten Art dadurch gelöst, dass das Gehäuse einen Kühlmantel mit jeweils nach radial innen weisenden Gehäuse-Einlassöffnungen und Gehäuse-Auslassöffnungen sowie zwischen den Gehäuse-Einlassöffnungen und Gehäuse-Auslassöffnungen angeordneten Gehäuse-Kühlkanälen aufweist, in welchen jeweils ein Kühlmittel in axialer Richtung hindurchführbar ist, wobei der Rotor einen Rotor-Mantel konzentrisch zu einer Welle und zwei axiale Enden senkrecht zur Welle sowie an seinen beiden axialen Enden Rotor-Einlassöffnungen aufweist, durch welche ein Kühlmittel in den Rotor eindringen kann, wobei der Rotor zumindest ein Rotor-Kühlmittelleitblech aufweist, welches innerhalb des Rotors konzentrisch zum Rotor-Mantel angeordnet ist, welches in Bezug auf die Rotor-Einlassöffnungen radial weiter außen angeordnet ist, und welches sich jeweils vom ersten axialen Ende des Rotors und vom zweiten axialen Ende des Rotors in Richtung des Bereichs der axialen Mitte des Rotors erstreckt, wobei das zumindest eine Rotor-Kühlmittelleitblech im Bereich der axialen Mitte des Rotors zumindest eine Öffnung nach radial außen aufweist, durch welche das Kühlmittel innerhalb des Rotors nach radial außen zur Innenfläche des Rotor-Mantels führbar ist, wobei der Rotor zumindest einen radialen Kühlschlitz im Bereich der axialen Mitte des Rotor-Mantels aufweist, durch welchen jeweils das Kühlmittel von der Innenfläche des Rotor-Mantels zum Spalt führbar ist, wobei der Rotor an seinen beiden axialen Enden Rotor-Auslassöffnungen aufweist, welche in Bezug auf das zumindest eine Rotor-Kühlmittelleitblech radial weiter außen angeordnet sind und durch welche das Kühlmittel vom Rotor in axialer Richtung herausführbar ist, und wobei das Gehäuse an den axialen Enden des Rotors jeweils ein Gehäuse-Kühlmittelleitblech aufweist, durch welches das Kühlmittel aus dem Spalt und aus den Rotor-Auslassöffnungen in die Gehäuse-Einlassöffnungen führbar ist und durch welches strömungstechnisch getrennt davon das Kühlmittel von den Gehäuse-Auslassöffnungen in die Rotor-Einlassöffnungen führbar ist.

Die Idee dieser Erfindung besteht darin, die kompakte Bauweise einer einflutig gekühlten elektrischen Maschine mit der verbesserten Kühlung durch einen radialen Kühlschlitz zu kombinieren.

Erfindungsgemäß weist der Rotor an seinen beiden axialen Enden Rotor-Einlassöffnungen auf, durch welche das Kühlmittel in den Rotor eindringen kann. Im Betrieb wird das eingedrungene Kühlmittel durch die Rotation des Rotors und die einhergehenden Zentrifugalkräfte nach radial außen gedrückt. Anhand des Rotor-Kühlmittelleitblechs, welches im Bereich der axialen Mitte des Rotors zumindest eine Öffnung nach radial außen aufweist, bewegt sich das nach radial außen beschleunigte Kühlmittel von den beiden axialen Enden des Rotors, wo das Kühlmittel in den Rotor eingedrungen ist, zum Bereich der axialen Mitte des Rotors und wird dort innerhalb des Rotors nach radial außen zur Innenfläche des Rotor-Mantels geführt. Dabei ist das Rotor-Kühlmittelleitblech in radialer Richtung zwischen den Rotor-Einlassöffnungen und den Rotor-Auslassöffnungen angeordnet.

Anschließend teilt sich das Kühlmittel in drei Kühlmittelströme auf. Ein erster und ein zweiter Kühlmittelstrom bewegen sich bei Betrieb der elektrischen Maschine jeweils entlang der Innenfläche des Rotor-Mantels zur einen bzw. zur anderen axialen Stirnfläche Rotors, wo der jeweilige Kühlmittelstrom den Rotor über die Rotor-Auslassöffnungen verlässt. Dabei wird der Rotor-Mantel abgekühlt.

Der dritte Kühlmittelstrom verlässt den Rotor durch den radialen Kühlschlitz im Bereich der Mitte des Rotors und dringt somit in den Spalt zwischen Rotor und Stator ein. Bei Betrieb der elektrischen Maschine wird der dritte Kühlmittelstrom zusätzlich durch Zentrifugalkräfte nach außen gedrückt, so dass durch den radialen Kühlschlitz ein genügend großer Kühlmittelstrom fließt. Dabei bleibt der für den radialen Kühlschlitz benötigte Bauraum in axialer Richtung im Vergleich zu einem Rotor ohne radiale Kühlschlitze praktisch unverändert, was die Konstruktion einer kompakten und dennoch gut gekühlten elektrischen Maschine ermöglicht.

Im Spalt angekommen teilt sich der dritte Kühlmittelstrom, wobei ein Teil innerhalb des Spalts zum einen axialen Ende des Rotors strömt und der andere Teil innerhalb des Spalts zum anderen axialen Ende des Rotors strömt. Somit werden auch die Außenfläche des Rotor-Mantels sowie die zum Rotor weisende Oberfläche des Stators gekühlt.

Durch diese Führung der Kühlmittelströme wird also der Rotor-Mantel, welcher im Betrieb eine beträchtliche Abwärme erzeugt und somit besonders gut gekühlt werden muss, sowohl von innen als auch von außen mit frischem Kühlmittel versorgt. Besonders vorteilhaft ist daran, dass die Kühlung jeweils im Bereich der axialen Mitte des Rotors beginnt, also dort wo im Betrieb üblicherweise ein Wärmestau bzw. die höchste Temperatur zu erwarten ist. Das Kühlmittel wird sowohl an der Innenfläche als auch an der Außenfläche des Rotor-Mantels vom Bereich der axialen Mitte des Rotors zu seinen beiden axialen Enden geführt, so dass insgesamt die Kühlstrecke sowohl innerhalb als auch außerhalb des Rotors nur gleich der halben Rotorlänge ist. Im Vergleich zu einer Kühlung, bei welcher ein Kühlmittel vom einen axialen Ende des Rotors zum anderen axialen Ende geführt wird, halbiert sich somit die Strecke, bei der das Kühlmittel erwärmt wird. Durch das vergrößerte Temperaturgefälle zwischen dem Kühlmittel und der Mantelfläche des Rotors wird deshalb eine bessere Kühlung erreicht. Nachdem die drei Kühlmittelströme den Rotor-Mantel von innen und außen gekühlt haben, werden am jeweiligen axialen Ende des Rotors der erste bzw. der zweite Kühlmittelstrom, welcher den Rotor jeweils an einem axialen Ende durch die Rotor-Auslassöffnungen verlässt, mit demjenigen Teil des dritten Kühlmittelstroms vereinigt, der im Spalt entlang der Außenfläche des Rotor-Mantels zum selben axialen Ende des Rotors strömt.

Die vereinigten Kühlmittelströme an den beiden axialen Enden des Rotors strömen anschließend bei Betrieb der elektrischen Maschine jeweils durch die Gehäuse-Einlassöffnungen in die Gehäuse-Kühlkanäle und werden durch diese innerhalb des Kühlmantels des Gehäuses zum jeweils anderen axialen Ende geführt. Dort verlassen sie jeweils die Gehäuse-Kühlkanäle durch die Gehäuse-Auslassöffnungen, von wo sie zu den Rotor-Einlassöffnungen strömen. Die Kühlmittelströme können dabei die vom Rotor bzw. vom Stator aufgenommene Wärme an den Kühlmantel des Gehäuses abgeben, wobei das Gehäuse wiederum die Wärme weiter nach außen abgibt, so dass effektiv ein Wärmetransport vom Inneren des Motors nach außen stattfindet. Für einen besonders effektiven Wärmetransport, bei dem die Kühlmittelströme im Kühlmantel besonders gut abgekühlt werden, kann das Gehäuse beispielsweise Kühlrippen aufweisen.

Die Gehäuse-Kühlkanäle sind beispielsweise als jeweils von einander getrennte erste Gehäuse-Kühlkanäle und zweite Gehäuse-Kühlkanäle ausgeführt, wobei das Kühlmittel anhand der ersten Gehäuse-Kühlkanäle durch die Gehäuse-Einlassöffnungen am ersten axialen Ende des Rotors zu den Gehäuse-Auslassöffnungen am zweiten axialen Ende des Rotors führbar ist, und wobei das Kühlmittel anhand der zweiten Gehäuse-Kühlkanäle durch die Gehäuse-Einlassöffnungen am zweiten axialen Ende des Rotors zu den Gehäuse-Auslassöffnungen am ersten axialen Ende des Rotors führbar ist.

Insbesondere können die ersten Gehäuse-Kühlkanäle das Kühlmittel von der A-Seite, englisch "drive-end"-Seite, zur B-Seite, englisch "non-drive-end"-Seite, und die zweiten Gehäuse-Kühlkanäle entsprechend von der B-Seite zur A-Seite führen. Durch diese Unterteilung der Gehäuse-Kühlkanäle kann im Betrieb der elektrischen Maschine eine gegenläufige Kühlmittelströmung erreicht werden, welche für die Kühlung der elektrischen Maschine besonders förderlich ist. Beispielsweise können sich in Umfangsrichtung die ersten und die zweiten Gehäuse-Kühlkanäle abwechseln, so dass sich die Kühlmittelströme in Umfangsrichtung benachbarte Gehäuse-Kühlkanäle bei Betrieb der elektrischen Maschine axial in entgegengesetzter Richtung bewegen.

Das Gehäuse-Kühlmittelleitblech am jeweiligen axialen Ende des Rotors stellt sicher, dass der Kühlmittelstrom von der Gehäuse-Auslassöffnung zur Rotor-Einlassöffnung geführt wird und gleichzeitig der erste bzw. der zweite Kühlmittelstrom aus den jeweiligen Rotor-Auslassöffnungen zusammen mit dem entsprechenden Teil des dritten Kühlmittelstroms aus dem Spalt zwischen Rotor und Stator in die Gehäuse-Einlassöffnung geführt wird.

Bei einer vorteilhaften Ausgestaltung der Erfindung ist das Kühlmittel von den Rotor-Auslassöffnungen mittels jeweils am radialen Ende des Rotors angeordneten Strömungsmaschinen in die Gehäuse-Einlassöffnungen bewegbar, wobei das Kühlmittel durch das jeweilige Gehäuse-Kühlmittelleitblech von den Rotor-Auslassöffnungen zur jeweiligen Strömungsmaschine führbar ist.

Die Strömungsmaschinen können sowohl abhängig als auch unabhängig von der Drehzahl des Rotors betrieben werden und können beispielsweise als Axial-Strömungsmaschinen ausgeführt werden, wobei der entstehende jeweilige Kühlmittelstrom in axialer Richtung durch das Gehäuse-Kühlmittelleitblech in Richtung der Gehäuse-Einlassöffnungen umgelenkt wird. Denkbar ist auch, die Strömungsmaschinen als Radial-Strömungsmaschinen auszuführen, die insbesondere durch jeweils ein drehfest mit dem Rotor verbundenes Propellerblatt gebildet werden. Ein solches Propellerblatt beschleunigt das Kühlmittel in radialer Richtung nach außen und kann beispielsweise jeweils am axialen Ende des Rotors befestigt werden.

Durch die Strömungsmaschinen ist ein besonders großer Volumenstrom das Kühlmittel erreichbar, wodurch die Kühlung der elektrischen Maschine weiter verbessert werden kann. Insbesondere bei Strömungsmaschinen, die unabhängig von der Rotordrehzahl betrieben werden können, kann auch bei geringer Drehzahl des Rotors ein ausreichend großer Volumenstrom sichergestellt werden.

Das jeweilige Gehäuse-Kühlmittelleitblech verhindert dabei einen strömungstechnischen "Kurzschluss", indem gewährleistet wird, dass der erste bzw. der zweite Kühlmittelstrom aus den jeweiligen Rotor-Auslassöffnungen vollständig und direkt zur jeweiligen Strömungsmaschine geleitet wird.

Bei einer weiteren vorteilhaften Ausgestaltung der Erfindung sind die Gehäuse-Auslassöffnungen jeweils axial weiter außen als die Gehäuse-Einlassöffnungen angeordnet, wobei das jeweilige Gehäuse-Kühlmittelleitblech axial zwischen den jeweiligen Gehäuse-Einlassöffnungen und Gehäuse-Auslassöffnungen mit dem Gehäuse verbunden ist.

Ausgehend von der axialen Mitte des Rotors zum jeweiligen axialen Ende sind somit zunächst die Gehäuse-Einlassöffnungen, dann die Verbindung des Gehäuse-Kühlmittelleitblechs mit dem Gehäuse und schließlich die Gehäuse-Auslassöffnungen vorgesehen. Dies erlaubt eine materialsparende Ausführung der jeweiligen Gehäuse-Kühlmittelleitbleche und stellt dabei gleichzeitig sicher, dass die Kühlmittelströme strömungstechnisch effizient geführt werden können.

Bei einer weiteren vorteilhaften Ausgestaltung der Erfindung weist der Rotor radial außen angebrachte Permanentmagnete auf und der radiale Kühlschlitz ist zwischen zwei Permanentmagneten angeordnet.

Derartige Permanentmagnet-Anordnungen können bei permanent erregten Synchronmaschinen, beispielsweise permanent erregten Synchrongeneratoren eingesetzt werden. Bei herkömmlichen, permanent erregten Synchrongeneratoren erhitzen sich die Magnete im Betrieb und ohne besondere Kühlung besonders stark, was aber verhindert werden muss, weil die Permanentmagnete hitzeempfindlich sind und schlimmstenfalls entmagnetisiert werden können.

Dadurch, dass der radiale Kühlschlitz im Bereich der axialen Mitte des Rotors zwischen zwei Permanentmagneten hindurch geführt wird, wird sichergestellt, dass die besonders gefährdeten Permanentmagnete im Bereich der axialen Mitte des Rotors besonders gut gekühlt werden. Die Permanentmagnete werden dabei sowohl von radial außen durch den dritten Kühlmittelstrom als auch von radial innen durch den ersten bzw. zweiten Kühlmittelstrom gekühlt, wobei die jeweiligen Kühlmittelströme vom Bereich der axialen Mitte des Rotors zum jeweiligen axialen Ende des Rotors geführt werden. Dies stellt eine ausreichende Kühlung aller Permanentmagnete sicher.

Denkbar ist dabei, dass die Permanentmagnete auf der radialen Außenfläche des Rotors angebracht sind oder sich als vergrabene Permanentmagnete im Rotor in der Nähe der radialen Außenfläche des Rotors befinden.

Bei einer weiteren vorteilhaften Ausgestaltung der Erfindung ist der radiale Kühlschlitz als im Bereich der axialen Mitte des Rotors angeordneter Doppelschlitz ausgeführt. Durch den Doppelschlitz wird die axiale Länge der elektrischen Maschine nicht oder nur unwesentlich vergrößert, er kann aber bei elektrischen Maschinen, welche im Bereich der axialen Mitte des Rotors eine besonders leistungsstarke Kühlung benötigen, entscheidende Vorteile bieten. Der Doppelschlitz kann derart ausgeführt werden, dass die beiden Schlitze an den beiden in Umfangsrichtung befindlichen Enden eines Permanentmagneten vorbei radial nach außen geführt werden. Alternativ kann der Doppelschlitz auch derart ausgeführt werden, dass die beiden Schlitze an den beiden axialen Enden eines Permanentmagneten vorbei radial nach außen geführt werden.

Bei einer weiteren vorteilhaften Ausgestaltung der Erfindung weist die elektrische Maschine am jeweiligen axialen Ende des Stators einen Wickelkopf auf, wobei das Kühlmittel anhand des jeweiligen Gehäuse-Kühlmittelleitblechs aus dem Spalt und aus den Rotor-Auslassöffnungen den jeweiligen Wickelkopf umströmend in die Gehäuse-Einlassöffnungen führbar ist.

Üblicherweise weist der Stator von elektrischen Maschinen an beiden axialen Enden jeweils einen Wickelkopf auf. Insbesondere entsteht der Wickelkopf dadurch, dass axial verlaufende und in Nuten eingebrachte Wicklungen am jeweiligen axialen Ende von einer Nut herausgeführt und in eine andere Nut hineingeführt werden. Weil die Wickelköpfe bei Betrieb der elektrischen Maschine viel Abwärme produzieren, ist eine gute Kühlung der Wickelköpfe sehr wichtig. Durch das Vorbeiführen der Kühlmittelströme an den Wickelköpfen mittels der jeweiligen Gehäuse-Kühlmittelleitbleche wird ein guter Abtransport der Abwärme der Wickelköpfe gewährleistet.

Bei einer weiteren vorteilhaften Ausgestaltung der Erfindung ist im Kühlmantel des Gehäuses eine zusätzliche Kühlervorrichtung angeordnet. Die Kühlmittelströme in den Gehäuse-Kühlkanäle fließen dabei an der zusätzlichen Kühlervorrichtung vorbei bzw. entlang, so dass die Kühlmittelströme im Kühlmantel des Gehäuses durch die zusätzliche Kühlervorrichtung besonders stark abgekühlt werden. Dadurch nimmt die zusätzliche Kühlervorrichtung die Abwärme der Kühlmittelströme auf, welche die zusätzliche Kühlervorrichtung beispielsweise aus dem Gehäuse der elektrischen Maschine heraus transportiert und außerhalb der elektrischen Maschine abgibt. Die Kühlervorrichtung kann beispielsweise in Form eines zusätzlichen Flüssigkeits-Kühlmantels realisiert werden, welcher sich in axialer Richtung zumindest auf der axialen Länge des Stators erstreckt und den Stator in Umfangsrichtung umschließt.

Bei einer weiteren vorteilhaften Ausgestaltung der Erfindung ist das Kühlmittel gasförmig.

Im Folgenden wird die Erfindung anhand der in den Figuren dargestellten Ausführungsbeispiele näher beschrieben und erläutert. Es zeigen:
- FIG 1: einen Längsschnitt eines ersten Ausführungsbeispiels einer erfindungsgemäßen elektrischen Maschine,
- FIG 2: einen Querschnitt des ersten Ausführungsbeispiels,
- FIG 3: eine perspektivische Darstellung eines Rotors gemäß einem zweiten Ausführungsbeispiel, und
- FIG 4: eine perspektivische Darstellung eines Rotors gemäß einem dritten Ausführungsbeispiel.

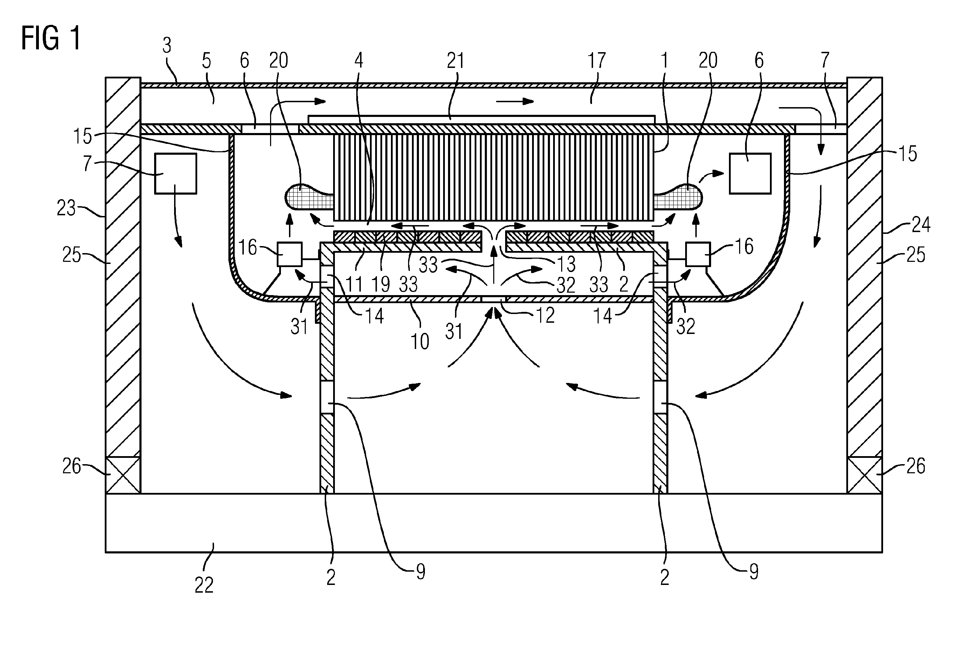

Figur 1 zeigt einen Längsschnitt eines ersten Ausführungsbeispiels einer erfindungsgemäßen elektrischen Maschine. Die elektrische Maschine weist ein Gehäuse 3 sowie einen im Gehäuse 3 untergebrachten Stator 1 auf. An den axialen Enden des Stators 1 ragen jeweils Wickelköpfe 20 heraus.

An den beiden axialen Enden des Gehäuses 3 befinden sich die A-Seite 23 und die B-Seite 24 der elektrischen Maschine, welche beide über einen Lagerschild 25 und Lager 26 verfügen.

Mittels der Lager 26 ist eine Welle 22 drehbar im Gehäuse 3 gelagert, wobei ein Rotor 2 drehfest mit der Welle 22 verbunden ist. Der Rotor 2 ist zylinderförmig ausgeführt und weist einen Rotor-Mantel 11 auf, auf welchem Permanentmagnete 19 befestigt sind.

Zur Kühlung der elektrischen Maschine weist der Rotor 2 Rotor-Einlassöffnungen 9 sowie Rotor-Auslassöffnungen 14 an seinen beiden axialen Stirnseiten auf, wobei die Rotor-Auslassöffnungen 14 radial weiter außen als die Rotor-Einlassöffnungen 9 angeordnet sind. Ein Kühlmedium kann durch die Rotor-Einlassöffnungen 9 in den Rotor 2 eindringen und wird beim Betrieb der elektrischen Maschine durch die Rotation des Rotors 2 nach radial außen gedrückt. Der Rotor weist ein Rotor-Kühlmittelleitblech 10 auf, das innerhalb des Rotors 2 konzentrisch zur Welle 22 angeordnet ist. In radialer Richtung befindet sich das Rotor-Kühlmittelleitblech 10 zwischen den Rotor-Einlassöffnungen 9 und den Rotor-Auslassöffnungen 14.

Durch eine Öffnung 12 des Rotor-Kühlmittelleitblechs 10 im Bereich der axialen Mitte des Rotors 2 kann das nach außen gedrückte Kühlmittel innerhalb des Rotors 2 nach radial außen strömen, wobei sich drei Kühlmittelströme bilden.

Ein erster Kühlmittelstrom 31 und ein zweiter Kühlmittelstrom 32 strömen jeweils vom Bereich der axialen Mitte des Rotors 2 an der Innenfläche des Rotor-Mantels 11 entlang und kühlen diesen dadurch von innen. Dabei strömt der erste Kühlmittelstrom 31 in Richtung der A-Seite 23 und der zweite Kühlmittelstrom 32 strömt in Richtung der B-Seite 24, wobei die beiden Kühlmittelströme den Rotor 2 am jeweiligen axialen Ende durch die Rotor-Auslassöffnungen 14 verlassen. An beiden axialen Enden des Rotors 2 sind anschließend Strömungsmaschinen 16 vorgesehen, welche die beiden Kühlmittelströme ansaugen bzw. nach radial außen drücken. Ein am jeweiligen axialen Ende des Rotors 1 angebrachtes Gehäuse-Kühlmittelleitblech 15 lenkt den ersten Kühlmittelstrom 31 bzw. den zweiten Kühlmittelstrom 32 zu der jeweiligen Strömungsmaschine 16 hin.

Ein dritter Kühlmittelstrom 33 strömt durch einen radialen Kühlschlitz 13 im Bereich der axialen Mitte des Rotors 2 nach radial außen durch den Rotor-Mantel 11 hindurch und gelangt somit in einen zwischen dem Stator 1 und dem Rotor 2 angeordneten Spalt 4. Der dritte Kühlmittelstrom 33 teilt sich dabei in zwei Teile auf, wobei die beiden Teile innerhalb des Spaltes 4 jeweils vom Bereich der axialen Mitte des Rotors 2 zu den beiden axialen Enden des Rotors strömen. Dadurch werden der Rotor-Mantel 11 sowie die Permanentmagnete 19 von radial außen gekühlt und die Innenseite des Stators 1 von radial innen gekühlt.

Nachdem der erste Kühlmittelstrom 31 bzw. der zweite Kühlmittelstrom 32 die jeweilige Strömungsmaschine 16 verlassen hat wird er mit dem dritten Kühlmittelstrom 33, der aus dem Spalt 4 zwischen Stator 1 und Rotor 2 strömt, vereinigt und durch das jeweilige Gehäuse-Kühlmittelleitblech 15 zum jeweiligen Wickelkopf 20 geleitet. Dadurch wird auch der jeweilige Wickelkopf 20 gekühlt. Anschließend wird das Kühlmittel durch das jeweilige Gehäuse-Kühlmittelleitblech 15 in Gehäuse-Einlassöffnungen 6 geleitet.

Das Kühlmittel strömt dann innerhalb eines Kühlmantels 5 des Gehäuses 3 in Gehäuse-Kühlkanälen 17 zum jeweils anderen axialen Ende des Gehäuses 3. Dort verlässt das Kühlmittel die Gehäuse-Kühlkanäle 17 durch Gehäuse-Auslassöffnungen 7. Im Kühlmantel 5 ist eine Kühlervorrichtung 21 vorgesehen, welche das Kühlmedium abkühlt und die aufgenommene Abwärme aus dem Gehäuse 3 der elektrischen Maschine heraus transportiert.

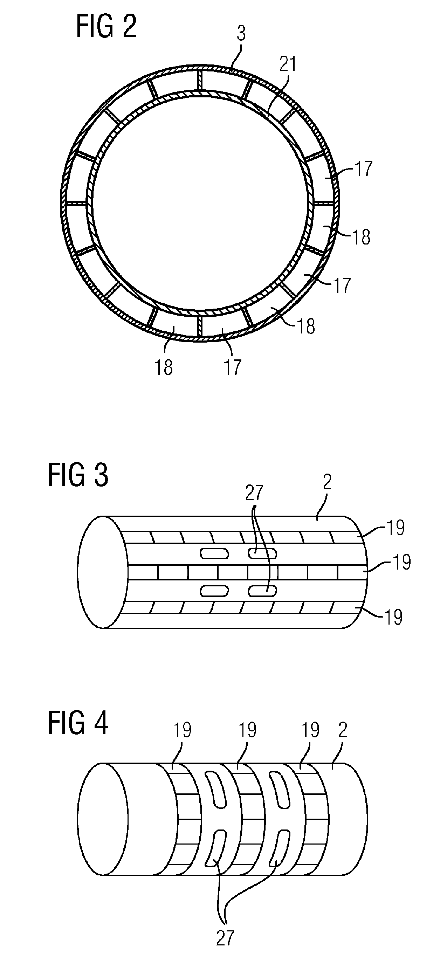

In axialer Richtung von der Mitte zur Stirnseite des Gehäuses 3 sind zunächst der Stator 1, dann die Gehäuse-Einlassöffnungen 6, anschließend die Gehäuse-Auslassöffnungen 7 und schließlich das jeweilige Lagerschild 25 angeordnet. Dabei sind erste Gehäuse-Kühlkanäle 17, welche das Kühlmittel von der A-Seite 23 zur B-Seite 24 leiten, und zweite Gehäuse-Kühlkanäle 18 vorgesehen, welche das Kühlmittel in umgekehrter Richtung leiten. Dies wird in Figur 2 näher dargestellt.

Schließlich strömt das Kühlmittel an beiden axialen Enden des Stators 1 aus den Gehäuse-Auslassöffnungen 7 heraus und wird durch das jeweilige Gehäuse-Kühlmittelleitblech 15 wiederum zu den Rotor-Einlassöffnungen 14 geführt, um den Kühlkreislauf zu vervollständigen. Dabei wird im Betrieb durch die Öffnung 12 im Rotor-Kühlmittelleitblech 10 und den axialen Kühlschlitz 13 mittels der Zentrifugalkräfte auf das Kühlmittel sowie die Strömungsmaschinen 16 ein ausreichender Sog bzw. ein ausreichender Druckgradient generiert, so dass das Kühlmittel zwecks der Kühlung der elektrischen Maschine in ausreichendem Maße innerhalb des Gehäuses 3 umgewälzt wird.

Figur 2 zeigt einen Querschnitt des ersten Ausführungsbeispiels. Gleiche Bezugszeichen wie in Figur 1 bezeichnen dabei gleiche Gegenstände. Das Gehäuse 3 ist zylinderförmig ausgeführt und weist in seinem Inneren den Kühlmantel 5 mit den Gehäuse-Kühlkanälen 17, 18 auf. Der Kühlmantel 5 wird gebildet durch erste Gehäuse-Kühlkanäle 17 und zweite Gehäuse-Kühlkanäle 18, welche in Umfangsrichtung abwechselnd angeordnet sind. Radial innerhalb der Gehäuse-Kühlkanäle 17, 18 ist die zusätzliche Kühlervorrichtung 21 angeordnet. Der Stator 1 und der Rotor 2 wurden aufgrund einer besseren Übersichtlichkeit in Figur 2 nicht dargestellt.

Figur 3 zeigt eine perspektivische Darstellung eines Rotors 2 gemäß einem zweiten Ausführungsbeispiel. Der Rotor 2 weist Reihen von Permanentmagneten 19 auf, wobei die Reihen in axialer Richtung ausgerichtet sind. Weiterhin weist der Rotor 2 Doppelschlitze 27 auf, wobei die beiden Schlitze eines Doppelschlitzes 27 an den beiden in Umfangsrichtung befindlichen Enden eines Permanentmagneten 19 vorbei radial nach außen geführt werden. In eingebautem Zustand des Rotors 2 und bei Betrieb der entsprechenden elektrischen Maschine strömt der dritte Kühlmittelstrom 33 durch die Doppelschlitze 27 radial nach außen aus dem Rotor 2 heraus.

Figur 4 zeigt eine perspektivische Darstellung eines Rotors gemäß einem dritten Ausführungsbeispiel. In Abwandlung zum zweiten Ausführungsbeispiel sind die Reihen von Permanentmagneten 19 in Umfangsrichtung ausgerichtet, wobei die beiden Schlitze eines Doppelschlitzes 27 an den beiden axialen Enden eines Permanentmagneten 19 vorbei radial nach außen geführt werden.

Zusammenfassend betrifft die Erfindung eine elektrische Maschine mit einem Stator und einen im Innern des Stators angeordneten zylindrischen Rotor, welche in einem Gehäuse angeordnet sind, wobei zwischen Stator und Rotor ein Spalt angeordnet ist. Um eine elektrische Maschine mit verbesserter Kühlung zu schaffen, wird unter anderem vorgeschlagen, dass das Gehäuse einen Kühlmantel mit Gehäuse-Kühlkanälen aufweist, in welchen jeweils ein Kühlmittel in axialer Richtung hindurchführbar ist, wobei der Rotor an seinen beiden axialen Enden Rotor-Einlassöffnungen, zumindest ein Rotor-Kühlmittelleitblech aufweist, welches innerhalb des Rotors konzentrisch zum Rotor-Mantel angeordnet ist, wobei das zumindest eine Rotor-Kühlmittelleitblech im Bereich der axialen Mitte des Rotors zumindest eine Öffnung nach radial außen aufweist, durch welche das Kühlmittel innerhalb des Rotors nach radial außen zur Innenfläche des Rotor-Mantels führbar ist, wobei der Rotor zumindest einen radialen Kühlschlitz im Bereich der axialen Mitte des Rotor-Mantels aufweist, durch welchen jeweils das Kühlmittel von der Innenfläche des Rotor-Mantels zum Spalt führbar ist, wobei der Rotor an seinen beiden axialen Enden Rotor-Auslassöffnungen aufweist, durch welche das Kühlmittel vom Rotor in axialer Richtung herausführbar ist, und wobei das Gehäuse an den axialen Enden des Rotors jeweils ein Gehäuse-Kühlmittelleitblech aufweist, durch welches das Kühlmittel aus dem Spalt und aus den Rotor-Auslassöffnungen in die Gehäuse-Einlassöffnungen führbar ist und durch welches strömungstechnisch getrennt davon das Kühlmittel von den Gehäuse-Auslassöffnungen in die Rotor-Einlassöffnungen führbar ist.

## Patentansprüche

1. Elektrische Maschine mit einem Stator (1) und einen im Innern des Stators (1) angeordneten zylindrischen Rotor (2), welche in einem Gehäuse (3) angeordnet sind,
- wobei zwischen Stator (1) und Rotor (2) ein Spalt (4) angeordnet ist,
- wobei das Gehäuse (3) einen Kühlmantel (5) mit jeweils nach radial innen weisenden Gehäuse-Einlassöffnungen (6) und Gehäuse-Auslassöffnungen (7) sowie zwischen den Gehäuse-Einlassöffnungen und Gehäuse-Auslassöffnungen angeordneten Gehäuse-Kühlkanälen (17, 18) aufweist, in welchen jeweils ein Kühlmittel in axialer Richtung hindurchführbar ist,
- wobei der Rotor (2) einen Rotor-Mantel (11) konzentrisch zu einer Welle (22) und zwei axiale Enden senkrecht zur Welle (22) aufweist,
- wobei der Rotor (2) an seinen beiden axialen Enden Rotor-Einlassöffnungen (9) aufweist, durch welche ein Kühlmittel in den Rotor (2) eindringen kann,
**dadurch gekennzeichnet, dass**
- der Rotor (2) zumindest ein Rotor-Kühlmittelleitblech (10) aufweist, welches innerhalb des Rotors (2) konzentrisch zum Rotor-Mantel (11) angeordnet ist, welches in Bezug auf die Rotor-Einlassöffnungen (9) radial weiter außen angeordnet ist, und welches sich jeweils vom ersten axialen Ende des Rotors (2) und vom zweiten axialen Ende des Rotors (2) in Richtung des Bereichs der axialen Mitte des Rotors (2) erstreckt,
- das zumindest eine Rotor-Kühlmittelleitblech (10) im Bereich der axialen Mitte des Rotors (2) zumindest eine Öffnung (12) nach radial außen aufweist, durch welche das Kühlmittel innerhalb des Rotors (2) nach radial außen zur Innenfläche des Rotor-Mantels (11) führbar ist,
- der Rotor (2) zumindest einen radialen Kühlschlitz (13) im Bereich der axialen Mitte des Rotor-Mantels (11) aufweist, durch welchen jeweils das Kühlmittel von der Innenfläche des Rotor-Mantels (11) zum Spalt (4) führbar ist,
- der Rotor (2) an seinen beiden axialen Enden Rotor-Auslassöffnungen (14) aufweist, welche in Bezug auf das zumindest eine Rotor-Kühlmittelleitblech (10) radial weiter außen angeordnet sind und durch welche das Kühlmittel vom Rotor (2) in axialer Richtung herausführbar ist, und
- das Gehäuse (3) an den axialen Enden des Rotors (2) jeweils ein Gehäuse-Kühlmittelleitblech (16) aufweist, durch welches das Kühlmittel aus dem Spalt (4) und aus den Rotor-Auslassöffnungen (14) in die Gehäuse-Einlassöffnungen (6) führbar ist und durch welches strömungstechnisch getrennt davon das Kühlmittel von den Gehäuse-Auslassöffnungen (7) in die Rotor-Einlassöffnungen (9) führbar ist.

2. Elektrische Maschine nach Anspruch 1,
wobei das Kühlmittel von den Rotor-Auslassöffnungen (14) mittels jeweils am axialen und radialen Ende des Rotors (2) angeordneten Strömungsmaschinen (16) in die Gehäuse-Einlassöffnungen (6) bewegbar ist, und
wobei das Kühlmittel durch das jeweilige Gehäuse-Kühlmittelleitblech (15) von den Rotor-Auslassöffnungen (14) zur jeweiligen Strömungsmaschine (16) führbar ist.

3. Elektrische Maschine nach einem der vorhergehenden Ansprüche,
wobei die Gehäuse-Auslassöffnungen (7) jeweils axial weiter außen als die Gehäuse-Einlassöffnungen (6) angeordnet sind, wobei das jeweilige Gehäuse-Kühlmittelleitblech (15) axial zwischen den jeweiligen Gehäuse-Einlassöffnungen (6) und Gehäuse-Auslassöffnungen (7) mit dem Gehäuse (3) verbunden ist.

4. Elektrische Maschine nach einem der vorhergehenden Ansprüche,
wobei der Rotor (2) radial außen angebrachte Permanentmagnete (19) aufweist und der radiale Kühlschlitz (13) zwischen zwei Permanentmagneten (19) angeordnet ist.

5. Elektrische Maschine nach einem der vorhergehenden Ansprüche,
wobei der radiale Kühlschlitz (13) als im Bereich der axialen Mitte des Rotors (2) angeordneter Doppelschlitz (27) ausgeführt ist.

6. Elektrische Maschine nach einem der vorhergehenden Ansprüche,
wobei die elektrische Maschine am jeweiligen axialen Ende des Stators (1) einen Wickelkopf (20) aufweist, und
wobei das Kühlmittel anhand des jeweiligen Gehäuse-Kühlmittelleitblechs (15) aus dem Spalt (4) und aus den Rotor-Auslassöffnungen (14) den jeweiligen Wickelkopf (20) umströmend in die Gehäuse-Einlassöffnungen (6) führbar ist.

7. Elektrische Maschine nach einem der vorhergehenden Ansprüche,
wobei im Kühlmantel (5) des Gehäuses (3) eine zusätzliche Kühlervorrichtung (21) angeordnet ist.

8. Elektrische Maschine nach einem der vorhergehenden Ansprüche,
wobei das Kühlmittel gasförmig ist.

## Claims

1. Electrical machine with a stator (1) and a cylindrical rotor (2) disposed inside the stator (1), which are disposed in a housing (3),
- wherein a gap (4) is disposed between stator (1) and rotor (2),
- wherein the housing (3) has a cooling jacket (5) with housing inlet openings (6) pointing inwards in each case and housing outlet openings (7) as well as housing cooling channels (17, 18) disposed between the housing inlet openings and housing outlet openings, in which a coolant is able to be conveyed in an axial direction in each case,
- wherein the rotor (2) has a rotor jacket (11) concentric to a shaft (22) and two axial ends at right angles to the shaft (22),
- wherein the rotor (2) has rotor inlet openings (9) at its two axial ends through which a coolant can penetrate into the rotor (2),
**characterised in that**
- the rotor (2) has a least one rotor coolant guide plate (10) which is disposed within the rotor (2) concentric to the rotor jacket (11), which is disposed radially further outwards in relation to the rotor inlet openings (9) and which extends in each case from the first axial end of the rotor (2) and from the second axial end of the rotor (2) in the direction of the area of the axial centre of the rotor (2),
- the at least one rotor coolant guide plate (10) has at least one opening (12) radially outwards in the area of the axial centre of the rotor (2) through which the coolant within the rotor (2) is able to be guided outwards to the inner surface of the rotor jacket (11),
- the rotor (2) has at least one radial cooling slot (13) in the area of the axial centre of the rotor jacket (11), through which the coolant is able to be guided from the inner surface of the rotor jacket (11) to the gap (4),
- the rotor (2) has outlet openings (14) at its two axial ends (14), which are disposed radially further outwards in relation to the at least one rotor coolant guide plate (10) and through which the coolant is able to be removed from the rotor (2) in the axial direction, and
- the housing (3) has a housing coolant guide plate (16) in each case at the axial ends of the rotor (2), through which the coolant is able to be guided out of the gap (4) and out of the rotor outlet openings (14) into the housing inlet openings (6) and through which, separated therefrom in terms of flow, the coolant is able to be guided from the housing outlet openings (7) into the rotor inlet openings (9).

2. Electrical machine according to claim 1,
wherein the coolant is able to be moved from the rotor outlet openings (14) by means of flow machines (16) disposed in each case on the axial and radial end of the rotor (2) into the housing inlet openings (6), and wherein the coolant is able to be guided by the respective housing coolant guide plate (15) from the rotor outlet openings (14) to the respective flow machine (16).

3. Electrical machine according to one of the preceding claims,
wherein the housing outlet openings (7) are disposed in each case axially further out than the housing inlet openings (6), wherein the respective housing coolant guide plate (15) is connected axially to the housing (3) between the respective housing inlet openings (6) and housing outlet openings (7).

4. Electrical machine according to one of the preceding claims,
wherein the rotor (2) has radially outer permanent magnets (19) attached to it and the radial cooling slot (13) is disposed between two permanent magnets (19).

5. Electrical machine according to one of the preceding claims,
wherein the radial cooling slot (13) is designed as a double slot (27) disposed in the area of the axial centre of the rotor (2).

6. Electrical machine according to one of the preceding claims,
wherein the electrical machine has a winding head (20) at the respective axial end of the stator (1), and
wherein the coolant is able to be guided by the respective housing coolant guide plate (15) from the gap (4) and out of the rotor outlet openings (14), flowing around the respective winding head (20), into the housing inlet openings (6).

7. Electrical machine according to one of the preceding claims,
wherein an additional cooler facility (21) is disposed in the cooling jacket (5) of the housing (3).

8. Electrical machine according to one of the preceding claims,
wherein the coolant is gaseous.

## Revendications

1. Machine électrique comprenant un stator ( 1 ) et un rotor ( 2 ) cylindrique disposé à l'intérieur du stator ( 1 ), qui sont disposés dans une enveloppe ( 3 ),
- dans laquelle il y a un interstice ( 4 ) entre le stator ( 1 ) et le rotor ( 2 ),
- dans laquelle l'enveloppe ( 3 ) a une chemise ( 5 ) de refroidissement ayant des ouvertures ( 6 ) d'entrée d'enveloppe tournées radialement vers l'intérieur et des ouvertures ( 7 ) de sortie d'enveloppe, ainsi que des canaux ( 17, 18 ) de refroidissement d'enveloppe, qui sont disposés entre les ouvertures d'entrée d'enveloppe et les ouvertures de sortie d'enveloppe et dans lesquels peut passer, dans la direction axiale, respectivement un fluide de refroidissement,
- dans laquelle le rotor (2) a une surface (11) latérale concentrique à un arbre (22) et deux extrémités axiales perpendiculaire à l'arbre (22),
- dans laquelle le rotor ( 2 ) a, à ses deux extrémités axiales, des ouvertures ( 9 ) d'entrée de rotor, par lesquelles un fluide de refroidissement peut pénétrer dans le rotor ( 2 ),
**caractérisée en ce que**
- le rotor ( 2 ) a au moins une chicane ( 10 ) pour du fluide de refroidissement du rotor, qui est disposée à l'intérieur du rotor ( 2 ) concentriquement à la surface ( 11 ) latérale du rotor, qui est disposée radialement plus à l'extérieur que les ouvertures ( 9 ) d'entrée de rotor et qui s'étend respectivement de la première extrémité axiale du rotor ( 2 ) et de la deuxième extrémité axiale du rotor ( 2 ) en direction de la zone du milieu axial du rotor ( 2 ),
- la au moins une chicane ( 10 ) pour du fluide de refroidissement du rotor a, dans la zone du milieu axial du rotor ( 2 ), au moins une ouverture ( 12 ) vers l'extérieur radialement, par laquelle le fluide de refroidissement peut être conduit à l'intérieur du rotor ( 2 ) vers l'extérieur radialement en direction de la face intérieure de la surface ( 11 ) latérale du rotor,
- le rotor ( 2 ) a au moins une fente ( 13 ) de refroidissement radiale dans la zone du milieu axial de la surface ( 11 ) latérale du rotor, fente par laquelle le fluide de refroidissement peut être conduit de la face intérieure de la surface ( 11 ) latérale du rotor à l'interstice ( 4 ),
- le rotor ( 2 ) a, à ses deux extrémités axiales, des ouvertures ( 14 ) de sortie du rotor, qui sont disposées, par rapport à la au moins une chicane ( 10 ) pour du fluide de refroidissement du rotor, radialement plus à l'extérieur et par lesquelles le fluide de refroidissement peut être sorti du rotor ( 3 ) dans la direction axiale, et
- l'enveloppe ( 3 ) a, aux extrémités axiales du rotor ( 2 ), respectivement une chicane pour du fluide de refroidissement d'enveloppe, par laquelle le fluide de refroidissement peut être conduit de l'interstice ( 4 ) et des ouvertures ( 14 ) de sortie de rotor aux ouvertures ( 6 ) d'entrée d'enveloppe et par laquelle, en en étant séparé du point de vue de la technique d'écoulement, le fluide de refroidissement peut être conduit des ouvertures ( 7 ) de sortie d'enveloppe aux ouvertures ( 9 ) d'entrée de rotor.

2. Machine électrique suivant la revendication 1,
dans laquelle le fluide de refroidissement peut aller des ouvertures ( 14 ) de sortie de rotor aux ouvertures ( 6 ) d'entrée d'enveloppe au moyen respectivement de turbomachines ( 16 ) montée à l'extrémité axiale et radiale du rotor ( 2 ), et dans laquelle le fluide de refroidissement peut aller des ouvertures ( 14 ) de sortie de rotor à la turbomachine ( 16 ) respective en passant par la chicane ( 15 ) pour du fluide de refroidissement d'enveloppe respective.

3. Machine électrique suivant l'une des revendications précédentes,
dans laquelle les ouvertures ( 7 ) de sortie d'enveloppe sont disposées respectivement axialement plus à l'extérieure que les ouvertures ( 6 ) d'entrée d'enveloppe, la chicane ( 15 ) pour du fluide de refroidissement d'enveloppe étant reliée à l'enveloppe ( 3 ) axialement entre les ouvertures ( 6 ) d'entrée d'enveloppe respectives et les ouvertures ( 7 ) de sortie d'enveloppe.

4. Machine électrique suivant l'une des revendications précédentes,
dans laquelle le rotor ( 2 ) a des aimants ( 19 ) permanents mis à l'extérieur radialement et la fente ( 13 ) de refroidissement radiale est disposée entre deux aimants ( 19 ) permanents.

5. Machine électrique suivant l'une des revendications précédentes,
dans laquelle la fente ( 13 ) de refroidissement radiale est réalisée sous la forme d'une fente ( 27 ) double, disposée dans la région du milieu axial du rotor ( 2 ).

6. Machine électrique suivant l'une des revendications précédentes,
dans laquelle la machine électrique a une tête ( 20 ) de bobine à l'extrémité axiale respective du stator ( 1 ) et dans laquelle le fluide de refroidissement, peut aller de l'interstice ( 4 ) et des ouvertures ( 14 ) de sortie de rotor aux ouvertures ( 6 ) d'entrée d'enveloppe en contournant la tête ( 20 ) de bobine respective.

7. Machine électrique suivant l'une des revendications précédentes,
dans laquelle un refroidisseur ( 21 ) supplémentaire est disposé dans la chemise ( 5 ) de refroidissement de l'enveloppe ( 3 ).

8. Machine électrique suivant l'une des revendications précédentes,
dans laquelle le fluide de refroidissement est gazeux.
